# EUROPEAN PATENT APPLICATION

(11) **EP 4 768 981 A1**
(43) Date of publication of application: **01.07.2026**
(21) Application number: 25220164.5
(22) Date of filing: 02.12.2025
(51) Int. Cl.: G01S 3/18, G01S 3/30, G01S 5/02, H01Q 25/00, G01S 5/00

(54) **SYSTEM AND METHOD FOR AUTO DETECTING TRAVEL DIRECTION OF AUTHORIZED USERS THROUGH AN ACCESS POINT OF A SECURITY SYSTEM**

(30) Priority: 23.12.2024 US 202418999593
(71) Applicant: Honeywell International Inc., Charlotte, NC 28202 (US)
(72) Inventor: BALL, Stuart Bryan, Charlotte, 28202 (US); KUMAR, Ranjay, Charlotte, 28202 (US); NKHATA, James Junior, Charlotte, 28202 (US); RADHAKRISHNAN, Arjun Poovathingal, Charlotte, 28202 (US)
(74) Representative: Haseltine Lake Kempner LLP

(57) **Abstract**

A device and system for detecting directional passage of wireless credentials includes a ground plane separating first and second antennas. The antennas detect wireless signals from credentials like Bluetooth beacons, phones, or smart watches carried by authorized users. The ground plane blocks signals to one antenna while allowing reception by the other, enabling a simple device that can accurately detect travel direction. A security system may use this travel detection to track facility ingress/egress, maintain occupancy counts, and automatically arm/disarm based on authorized user presence. The system can monitor door access events and issue alerts for unauthorized entries.

## Description

### TECHNICAL FIELD

The present disclosure relates generally to security systems, and more particularly to automatically detecting travel direction of authorized users through an access point of a security system.

### BACKGROUND

Security systems are commonly deployed to help protect buildings from unauthorized access. For a security system to provide maximum benefits, it is necessary for the security system to be armed when the last person leaves the residential building. In some cases, the last person may forget to arm the security system, which can leave the building susceptible to undetected break-ins. When a first person returns to the residential building, assuming that the security system is armed, the first person needs to disarm the security system. What would be desirable is a way to automatically arm the security system when the last person leaves and/or to automatically disarm the security system when a first person returns to the building. What would be desirable is a device that can facilitate automatically determining whether a person is leaving the building or is returning to the building.

### SUMMARY

The present disclosure relates generally to security systems, and more particularly to automatically detecting travel direction of authorized users through an access point of a security system. This may be useful to automatically arm and disarm the security system based on an occupancy count of the number of people currently in building. An example may be found in a device for detecting when a wireless credential passes by the device traveling from a first direction versus when the wireless credential passes by the device traveling from a second direction opposite to the first direction. The illustrative device includes a ground plane having a first side facing the first direction and a second side facing the second direction. A first antenna is situated adjacent the first side of the ground plane. The first antenna is configured to receive wireless signals from the wireless credential when the wireless credential is on the first side of the ground plane but is substantially blocked from receiving wireless signals from the wireless credential by the ground plane when the wireless credential is on the second side of the ground plane. A second antenna is situated adjacent the second side of the ground plane. The second antenna is configured to receive wireless signals from the wireless credential when the wireless credential is on the second side of the ground plane but is substantially blocked from receiving wireless signals from the wireless credential by the ground plane when the wireless credential is on the first side of the ground plane. A controller is operatively coupled to the first antenna and the second antenna. The controller is configured to detect that the wireless credential passes by the device traveling from the first direction when the first antenna receives wireless signals from the wireless credential while the second antenna is substantially blocked from receiving wireless signals from the wireless credential by the ground plane, followed by the first antenna being substantially blocked from receiving wireless signals from the wireless credential by the ground plane while the second antenna receives wireless signals from the wireless credential. The controller is configured to detect that the wireless credential passes by the device traveling from the second direction when the second antenna receives wireless signals from the wireless credential while the first antenna is substantially blocked from receiving wireless signals from the wireless credential by the ground plane, followed by the second antenna being substantially blocked from receiving wireless signals from the wireless credential by the ground plane while the first antenna receives wireless signals from the wireless credential.

Another example may be found in a security system of a facility having a door. The security system has an armed state and a disarmed state. The security system includes a device that is positioned adjacent the door. The device includes a first antenna and a second antenna separated by a ground plane. The device is configured to detect that a wireless credential of an authorized user of the facility ingresses in through the door when the first antenna receives wireless signals from the wireless credential while the second antenna is substantially blocked from receiving wireless signals from the wireless credential by the ground plane, followed by the first antenna being substantially blocked from receiving wireless signals from the wireless credential by the ground plane while the second antenna receives wireless signals from the wireless credential. The device is configured to detect that the wireless credential of the authorized user of the facility egresses out through the door when the second antenna receives wireless signals from the wireless credential while the first antenna is substantially blocked from receiving wireless signals from the wireless credential by the ground plane, followed by the second antenna being substantially blocked from receiving wireless signals from the wireless credential by the ground plane while the first antenna receives wireless signals from the wireless credential. The device includes a security system controller that is operatively coupled to the device. The security system controller, in response to the device detecting an ingress of the authorized user through the door, automatically sets the security system to the disarmed state.

Another example may be found in a non-transitory computer readable medium storing instructions. When the instructions are executed by one or more processors, the one or more processors are caused to detect ingress into a facility by each of a plurality of authorized users when a first antenna receives wireless signals from a wireless credential of a respective authorized user while a second antenna is substantially blocked from receiving wireless signals from the wireless credential of the respective authorized user by a ground plane, followed by the first antenna being substantially blocked from receiving wireless signals from the wireless credential of the respective authorized user by the ground plane while the second antenna receives wireless signals from the wireless credential of the respective authorized user. The one or more processors are caused to detect egress out of the facility by each of the plurality of authorized users when the second antenna receives wireless signals from the wireless credential of the respective authorized user while the first antenna is substantially blocked from receiving wireless signals from the wireless credential of the respective authorized user by the ground plane, followed by the second antenna being substantially blocked from receiving wireless signals from the wireless credential of the respective authorized user by the ground plane while the first antenna receives wireless signals from the wireless credential of the respective authorized user. The one or more processors are caused to maintain a count of a number of authorized users that are currently inside of the facility based at least in part on a relative count of a number of ingresses and a number of egresses detected for the plurality of authorized users. The one or more processors are caused to automatically set the security system to an armed state when the count of the number of authorized users that are currently inside of the facility reaches zero and to automatically set the security system to a disarmed state when the count of the number of authorized users that are currently inside switches from zero to one.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic view of an illustrative device that is configured to detect whether a person with a wireless credential is passing the device traveling in a first direction or in a second direction;
Figure 2 is a schematic view of the illustrative device of Figure 1, in place within a larger security system;
Figure 3 is a schematic view of the illustrative device of Figure 1;
Figure 4 is a flow diagram showing an illustrative series of steps that may be carried out by one or more processors when the one or more processors are executing instructions stored on a non-transitory computer readable storage medium;
Figure 5 is a schematic view showing automatically arming a security system when a person is the last to leave a residence; and
Figure 6 is a schematic view showing automatically disarming a security system when a person is the first to return to the residence.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

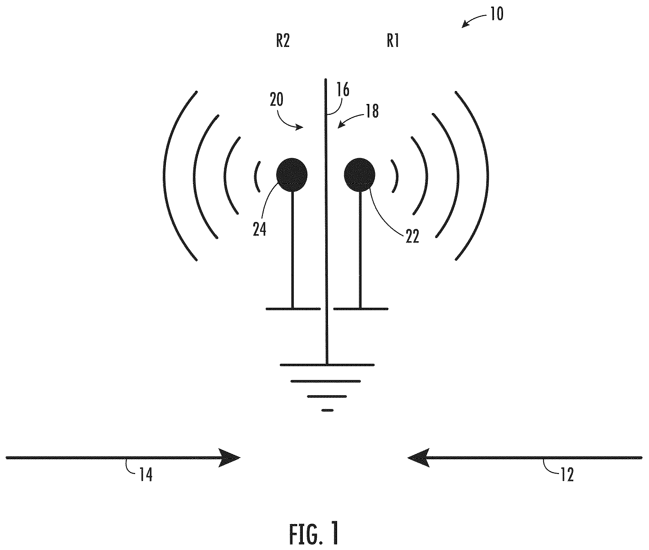

Figure 1 is a schematic diagram showing an illustrative device 10 for detecting when a wireless credential passes by the device 10 traveling in a first direction indicated by an arrow 12 versus when the wireless credential passes by the device 10 traveling in a second direction indicated by an arrow 14. The device 10 includes a ground plane 16. The ground plane 16 has a first side 18 that would be closest to a wireless credential traveling in a direction indicated by the arrow 12 and a second side 20 that would be closest to a wireless credential traveling in a direction indicated by the arrow 14. A first antenna 22 is situated adjacent the first side 18 of the ground plane 16 and electrically isolated from the ground plane 16. The first antenna 22 is configured to receive wireless signals from the wireless credential when the wireless credential is on the first side 18 of the ground plane 16 but is substantially blocked from receiving wireless signals from the wireless credential by the ground plane 16 when the wireless credential is on the second side 20 of the ground plane 16. A second antenna 24 is situated adjacent the second side 20 of the ground plane 16 and electrically isolated from the ground plane 16. The second antenna 24 is configured to receive wireless signals from the wireless credential when the wireless credential is on the second side 20 of the ground plane 16 but is substantially blocked from receiving wireless signals from the wireless credential by the ground plane 16 when the wireless credential is on the first side 18 of the ground plane 16.

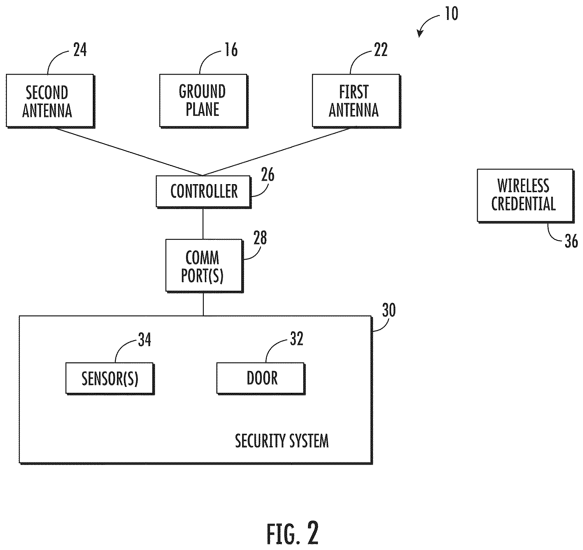

As seen in Figure 2, a controller 26 is operatively coupled to the first antenna 22 and to the second antenna 24. The controller 26 is configured to detect that the wireless credential passes by the device 10 traveling from the first direction indicated by arrow 12 when the first antenna 22 receives wireless signals from a wireless credential 36 while the second antenna 24 is substantially blocked from receiving wireless signals from the wireless credential 36 by the ground plane 16, followed by the first antenna 22 being substantially blocked from receiving wireless signals from the wireless credential 36 by the ground plane 16 while the second antenna 24 receives wireless signals from the wireless credential 36. The controller 26 is configured to detect that the wireless credential 36 passes by the device 10 traveling from the second direction indicated by arrow 14 when the second antenna 24 receives wireless signals from the wireless credential while the first antenna 22 is substantially blocked from receiving wireless signals from the wireless credential 36 by the ground plane 16, followed by the second antenna 24 being substantially blocked from receiving wireless signals from the wireless credential 36 by the ground plane 16 while the first antenna 22 receives wireless signals from the wireless credential 36. In this, the controller 26 is able to accurately determine whether the wireless credential 36 is traveling in the direction indicated by the arrow 12 or in the direction indicated by the arrow 14 (Figure 1).

In some cases, the device 10 may include a communication port 28 that allows the controller 26 to communicate with a security system 30 of a facility. In some cases, the controller 26 may be part of the security system 30. In some cases, the controller 26 may be separate from the security system 30, and the security system 30 may include its own security controller (not shown). The controller 26 may communicate an ingress event when the controller 26 detects that the wireless credential 36 passed by the device 10 traveling from the first direction indicated by the arrow 12. The controller 26 may be configured to communicate an egress event when the controller 26 detects that the wireless credential 36 passed by the device 10 traveling from the second direction indicated by the arrow 14. In some cases, the wireless credential 36 may be a Bluetooth beacon that is worn or carried by an authorized user of the facility (e.g. on the authorized user's keychain). The Bluetooth beacon may store a unique identifier associated with the authorized user. The unique identifier may be wirelessly transmitted as a wireless signal (e.g. broadcasted) for reception by the first antenna 22 and the second antenna 24 of the device 10. In some cases, the wireless credential 36 may be a key fob that is configured to be secured to a keychain of the authorized user. In some cases, the wireless credential 36 may be a cellular phone of the authorized user. In some cases, the wireless credential 36 may be a smart watch of the authorized user. In some cases, the device 10 may be positioned to detect ingress and egress through a door 32 of a facility. The device 10 and/or the security system 30 may include one or more sensors 34 that can detect an opening and closing of the door 32. The device 10 and/or the security system 30 of the facility may issue an audible alert when it is detected that the door 32 opened and closed without also detecting an ingress event or an egress event.

In some cases, the controller 26 may be configured to automatically set the security system 30 to its disarmed state when the controller 26 detects an ingress of an authorized user. In some cases, the controller 26 is configured to detect ingresses through the door 32 for each of a plurality of wireless credentials 36 of a plurality of authorized users of the facility and egresses through the door 32 for each of the plurality of wireless credentials 36 of the plurality of authorized users of the facility. The controller 26 may be configured to maintain a count of a number of authorized users that are currently inside the facility based at least in part on a relative count of a number of ingresses and a number of egresses detected for the plurality of authorized users. In some cases, the controller 26 may be configured to automatically set the security system 30 to the armed state when the count of the number of authorized users that are currently inside of the facility reaches zero. In some cases, the controller 26 may be configured to automatically set the security system 30 to the disarmed state when the count of the number of authorized users that are currently inside switches from zero to one. This may provide frictionless access to the facility while maintaining the security system in the proper armed or disarmed state.

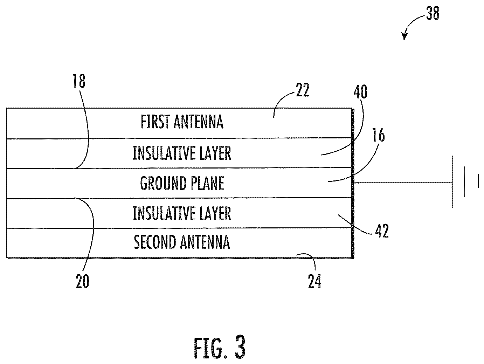

Figure 3 is a schematic diagram showing an illustrative multi-layer printed circuit board (PCB) 38. The PCB 38 may be considered as an example of how the device 10 may be built or assembled. As an example, the ground plane 16 may be situated on one or more intermediate layers of the multi-layer PCB 38. The first antenna 22 may be situated on one or more layers outboard of the first side 18 of the ground plane 16. The second antenna 24 may be situated on one or more layers outboard of the second side 20 of the ground plane 16. As an example, the ground plane may include a ground plane metal layers, the first antenna 22 may include a first metal layer on an outermost layer of the multi-layer PCB 38 facing a first direction, and the second antenna 24 may include a second metal layer on an outermost layer of the multi-layer PCB 38 facing an opposing second direction. The metal layers forming the ground plane 16, the first antenna 22 and the second antenna 24 may be physically separated and electrically isolated from each other via an insulative layer 40 that is disposed between the ground plane 16 and the first antenna 22 and an insulative layer 42 that is disposed between the ground plane 16 and the second antenna 24. Each of the first insulative layer 40 and the second insulative layer 42 may each include a single electrically insulating layer, or may include two or more electrically insulating layers.

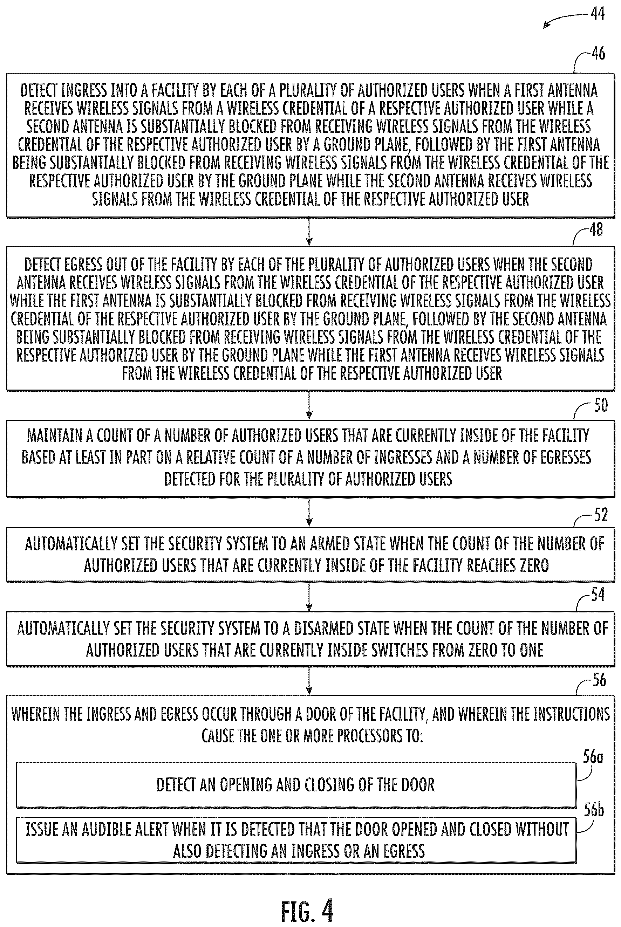

Figure 4 is a flow diagram showing an illustrative series of steps 44 that may be carried out by one or more processors when the one or more processors execute instructions that are stored on a non-transitory computer-readable storage medium. The one or more processors may be part of the controller 26 (Figure 1), for example. The one or more processors may be caused to detect ingress into a facility by each of a plurality of authorized users when a first antenna receives wireless signals from a wireless credential of a respective authorized user while a second antenna is substantially blocked from receiving wireless signals from the wireless credential of the respective authorized user by a ground plane, followed by the first antenna being substantially blocked from receiving wireless signals from the wireless credential of the respective authorized user by the ground plane while the second antenna receives wireless signals from the wireless credential of the respective authorized user, as indicated at block 46. In some cases, the wireless credential of a respective authorized user may include one or more of a key fob that is configured to be secured to a keychain of the respective authorized user, a cellular phone of the respective authorized user, or a smart watch of the respective authorized user. These are just examples.

The one or more processors may be caused to detect egress out of the facility by each of the plurality of authorized users when the second antenna receives wireless signals from the wireless credential of the respective authorized user while the first antenna is substantially blocked from receiving wireless signals from the wireless credential of the respective authorized user by the ground plane, followed by the second antenna being substantially blocked from receiving wireless signals from the wireless credential of the respective authorized user by the ground plane while the first antenna receives wireless signals from the wireless credential of the respective authorized user, as indicated at block 48. The one or more processors may be caused to maintain a count of a number of authorized users that are currently inside of the facility based at least in part on a relative count of a number of ingresses and a number of egresses detected for the plurality of authorized users, as indicated at block 50. The one or more processors may be caused to automatically set the security system to an armed state when the count of the number of authorized users that are currently inside of the facility reaches zero, as indicated at block 52. The one or more processors may be caused to automatically set the security system to a disarmed state when the count of the number of authorized users that are currently inside switches from zero to one, as indicated at block 54.

In some cases, ingress and egress may occur through a door of the facility, as indicated at block 56. In some cases, the instructions cause the one or more processors to detect an opening and closing of the door, as indicated at block 56a. In some cases, the instructions cause the one or more processors to issue an audible alert when it is detected that the door opened and closed without also detecting an ingress or an egress, as indicated at block 56b.

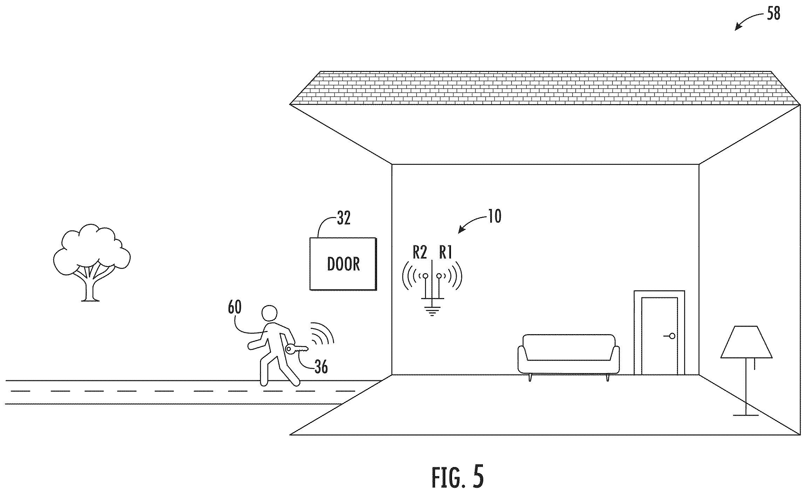

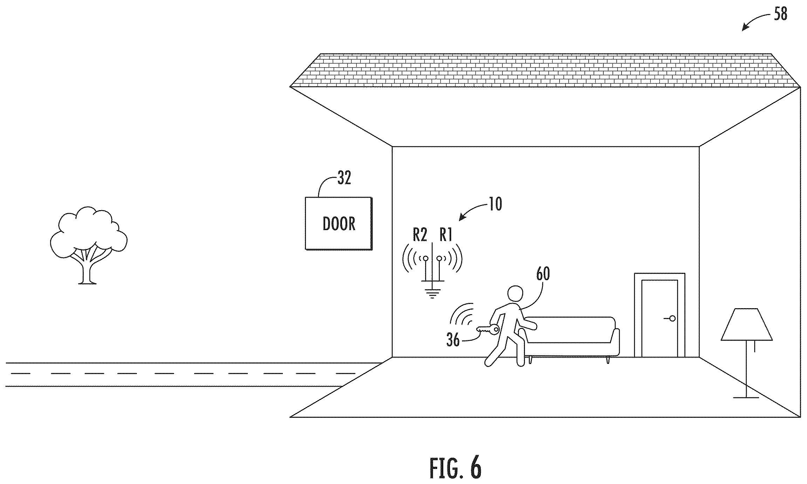

Figures 5 and 6 provide a schematic illustration of how the device 10 may be used to determine ingress and egress within a building 58 that includes the device 10 disposed adjacent the door 32. In Figure 5, a user 60 is schematically shown carrying the wireless credential 36. While shown as a key, the wireless credential 36 may be any of a variety of wireless equipped devices (e.g. Bluetooth) that can output a wireless signal detectable by the first antenna 22 and the second antenna 24, depending on the relative direction of travel of the user 60 carrying the wireless credential 36. In Figure 5, the user 60 can be seen as exiting the building 58. If the user 60 is the last person out of the building, the controller 26 (Figure 2) may determine that the building 58 is now empty, and may cause the security system 30 to automatically arm itself. In Figure 6, the user 60 can be seen as entering the building 58. The controller 26 may determine that the building 58 is no longer empty, and thus may cause the security system 30 to automatically disarm itself before issuing an alarm.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A device for detecting when a wireless credential passes by the device traveling from a first direction versus when the wireless credential passes by the device traveling from a second direction opposite to the first direction, the device comprising:
a ground plane having a first side facing the first direction and a second side facing the second direction;
a first antenna situated adjacent the first side of the ground plane, wherein the first antenna is configured to receive wireless signals from the wireless credential when the wireless credential is on the first side of the ground plane but is substantially blocked from receiving wireless signals from the wireless credential by the ground plane when the wireless credential is on the second side of the ground plane;
a second antenna situated adjacent the second side of the ground plane, wherein the second antenna is configured to receive wireless signals from the wireless credential when the wireless credential is on the second side of the ground plane but is substantially blocked from receiving wireless signals from the wireless credential by the ground plane when the wireless credential is on the first side of the ground plane;
a controller operatively coupled to the first antenna and the second antenna, wherein:
the controller is configured to detect that the wireless credential passes by the device traveling from the first direction when the first antenna receives wireless signals from the wireless credential while the second antenna is substantially blocked from receiving wireless signals from the wireless credential by the ground plane, followed by the first antenna being substantially blocked from receiving wireless signals from the wireless credential by the ground plane while the second antenna receives wireless signals from the wireless credential; and
the controller is configured to detect that the wireless credential passes by the device traveling from the second direction when the second antenna receives wireless signals from the wireless credential while the first antenna is substantially blocked from receiving wireless signals from the wireless credential by the ground plane, followed by the second antenna being substantially blocked from receiving wireless signals from the wireless credential by the ground plane while the first antenna receives wireless signals from the wireless credential.

2. The device of claim 1 comprising a multi-layer printed circuit board, wherein the ground plane is situated on one or more intermediate layers of the multi-layer printed circuit board, the first antenna is situated on one or more layers outboard of the first side of the ground plane, and the second antenna is situated on one or more layers outboard of the second side of the ground plane.

3. The device of claim 2, wherein the ground plane comprises ground plane metal layer on one or more of the intermediate layers of the multi-layer printed circuit board, the first antenna comprises a first metal layer on an outermost layer of the multi-layer printed circuit board facing the first direction, and the second antenna comprises a second metal layer on an outermost layer of the multi-layer printed circuit board facing the second direction.

4. The device of any of claims 1-3, wherein the wireless credential is a Bluetooth beacon carried by an authorized user of a facility, wherein the Bluetooth beacon stores a unique identifier that is associated with the authorized user and is wirelessly transmitted as a wireless signal for reception by the first antenna and the second antenna of the device.

5. The device of claim 4, wherein the wireless credential is any of:
a key fob that is configured to be secured to a keychain of the authorized user;
a cellular phone of the authorized user; or
a smart watch of the authorized user.

6. The device of any of claims 1-5, comprising:
a communication port for transmitting to a security system of a facility:
an ingress event when the controller detects that the wireless credential passed by the device traveling from the first direction; and
an egress event when the controller detects that the wireless credential passed by the device traveling from the second direction.

7. The device of claim 6, wherein the device is positioned to detect ingress and egress through a door of the facility, and the device and/or the security system of the facility includes one or more sensors that can detect an opening and closing of the door, the device and/or the security system of the facility issuing an audible alert when it is detected that the door opened and closed without also detecting an ingress event or an egress event.

8. A security system of a facility having a door, wherein the security system has an armed state and a disarmed state, the security system comprising:
a device positioned adjacent the door, wherein the device includes a first antenna and a second antenna separated by a ground plane, the device is configured to:
detect that a wireless credential of an authorized user of the facility ingresses in through the door when the first antenna receives wireless signals from the wireless credential while the second antenna is substantially blocked from receiving wireless signals from the wireless credential by the ground plane, followed by the first antenna being substantially blocked from receiving wireless signals from the wireless credential by the ground plane while the second antenna receives wireless signals from the wireless credential;
detect that the wireless credential of the authorized user of the facility egresses out through the door when the second antenna receives wireless signals from the wireless credential while the first antenna is substantially blocked from receiving wireless signals from the wireless credential by the ground plane, followed by the second antenna being substantially blocked from receiving wireless signals from the wireless credential by the ground plane while the first antenna receives wireless signals from the wireless credential; and
a security system controller operatively coupled to the device, wherein the security system controller, in response to the device detecting an ingress of the authorized user through the door, automatically set the security system to the disarmed state.

9. The security system of claim 8, wherein the device is configured to detect ingresses through the door for each of a plurality of wireless credentials of a plurality of authorized users of the facility and egresses through the door for each of the plurality of wireless credentials of the plurality of authorized users of the facility, and wherein the security system controller is configured to maintain a count of a number of authorized users that are currently inside of the facility based at least in part on a relative count of a number of ingresses and a number of egresses detected for the plurality of authorized users.

10. The security system of claim 9, wherein the security system controller is configured to automatically set the security system to the armed state when the count of the number of authorized users that are currently inside of the facility reaches zero.

11. The security system of claim 10, wherein the security system controller is configured to automatically set the security system to the disarmed state when the count of the number of authorized users that are currently inside switches from zero to one.

12. The security system of any of claims 8-11, wherein the device comprises a multi-layer printed circuit board, wherein the ground plane is situated on one or more intermediate layers of the multi-layer printed circuit board, the first antenna is situated on one or more layers outboard of the first side of the ground plane, and the second antenna is situated on one or more layers outboard of the second side of the ground plane.

13. The security system of claim 12, wherein the ground plane comprises ground plane metal layer on one or more of the intermediate layers of the multi-layer printed circuit board, the first antenna comprises a first metal layer on an outermost layer of the multi-layer printed circuit board facing a first direction, and the second antenna comprises a second metal layer on an outermost layer of the multi-layer printed circuit board facing a second direction opposing the first direction.

14. The security system of any of claims 8-13, wherein the wireless credential is a Bluetooth beacon carried by the authorized user of a facility, wherein the Bluetooth beacon stores a unique identifier that is associated with the authorized user and is wirelessly transmitted as a wireless signal for reception by the first antenna and the second antenna of the device.

15. A non-transitory computer readable medium storing instructions that when executed by one or more processors of a security system causes the one or more processors to:
detect ingress into a facility by each of a plurality of authorized users when a first antenna receives wireless signals from a wireless credential of a respective authorized user while a second antenna is substantially blocked from receiving wireless signals from the wireless credential of the respective authorized user by a ground plane, followed by the first antenna being substantially blocked from receiving wireless signals from the wireless credential of the respective authorized user by the ground plane while the second antenna receives wireless signals from the wireless credential of the respective authorized user;
detect egress out of the facility by each of the plurality of authorized users when the second antenna receives wireless signals from the wireless credential of the respective authorized user while the first antenna is substantially blocked from receiving wireless signals from the wireless credential of the respective authorized user by the ground plane, followed by the second antenna being substantially blocked from receiving wireless signals from the wireless credential of the respective authorized user by the ground plane while the first antenna receives wireless signals from the wireless credential of the respective authorized user;
maintain a count of a number of authorized users that are currently inside of the facility based at least in part on a relative count of a number of ingresses and a number of egresses detected for the plurality of authorized users;
automatically set the security system to an armed state when the count of the number of authorized users that are currently inside of the facility reaches zero; and
automatically set the security system to a disarmed state when the count of the number of authorized users that are currently inside switches from zero to one.
